## Europäisches Patentamt
## European Patent Office
## Office européen des brevets

(11) Veröffentlichungsnummer : **0 123 990**
**B1**

(12) **EUROPÄISCHE PATENTSCHRIFT**

(45) Veröffentlichungstag der Patentschrift :
**30.12.86**

(51) Int. Cl.⁴ : **F 02 B 33/42**

(21) Anmeldenummer : **84104221.1**

(22) Anmeldetag : **13.04.84**

(54) Regeleinrichtung eines Druckwellenladers.

(30) Priorität : 02.05.83 CH 2355/83

(43) Veröffentlichungstag der Anmeldung :
07.11.84 Patentblatt 84/45

(45) Bekanntmachung des Hinweises auf die Patenterteilung : 30.12.86 Patentblatt 86/52

(84) Benannte Vertragsstaaten :
CH DE FR GB IT LI

(56) Entgegenhaltungen :
EP-A- 0 075 360
EP-A- 0 080 741
CH-A- 398 185
PATENTS ABSTRACTS OF JAPAN, Band 5, Nr. 43(M60)(715), 23. März 1981; & JP - A - 56 523 (DAIHATSU KOGYO K.K.) 07.01.1981

(73) Patentinhaber : BBC Aktiengesellschaft Brown, Boveri & Cie.
Haselstrasse
CH-5401 Baden (CH)

(72) Erfinder : Jaussi, François
Lindenhof 20
CH-5430 Wettingen (CH)
Erfinder : Mayer, Andreas
Fohrhölzlistrasse 14b
CH-5443 Niederrohrdorf (CH)
Erfinder : Spinnler, Fritz
Waldenburgerstrasse 6
CH-4410 Liestal (CH)

## Beschreibung

Die Erfindung betrifft die Regeleinrichtung eines gasdynamischen Druckwellenladers gemäss Oberbegriff des Patentanspruchs 1.

Beim Einsatz eines Druckwellenladers zur Aufladung von Fahrzeug-Verbrennungsmotoren kann die Regelung des Ladeluftdruckes wegen des breiten Motordrehzahlbereiches erforderlich sein. Die Anwendung eines Abgasbypasses mit einem mediumgesteuerten Absperrorgan bringt dabei viele Vorteile. Der Druckwellenlader wird in diesem Falle derart ausgelegt, dass der theoretisch erreichbare Ladedruck bei der maximalen Motordrehzahl ohne Abblasen von Abgas oberhalb der zulässigen Ladedruckgrenze liegt. Um jedoch unterhalb der zulässigen Ladedruckgrenze zu bleiben, muss ein Teil der Abgase ab einer bestimmten Motordrehzahl abgeblasen werden. Diese Art der Regelung hat einen positiven Einfluss auf den Verlauf des verfügbaren Motordrehmomentes sowie auf den Brennstoffverbrauch.

In der Druckschrift EP-A-0 075 360 ist ein Verfahren zur Aufladung von Verbrennungsmotoren durch Abgaslader mit variablem Abgasschluckvermögen und ein nach diesem Verfahren arbeitender Verbrennungsmotor beschrieben. Der aufgeladene Motor arbeitet im untersten Lastbereich als Saugmotor, indem das Wastegate, der Einlassquerschnitt der Turbine und allfällige sonstige Abgaskanäle voll geöffnet sind. Bei Ueberschreiten dieses Lastbereiches wird der Durchflussquerschnitt der Turbine auf seinen kleinstmöglichen Wert verengt und anschliessend bei weiter zunehmender Last wiederum bis zu seinem Grösstwert bei Vollast vergrössert. Der Motor weist einen Varioturbolader auf, dessen Turbinendurchflussquerschnitt durch einen Drosselschieber in Abhängigkeit von der Kraftstoffeinspritzmenge und dem Ladedruck durch eine Stelleinrichtung und einen Steuerdruckmodulator gesteuert wird. Die Umformung von Grössen, die vom Lastzustand des Motors abhängen, geschieht sowohl im Steuerdruckmodulator als auch in der für die Steuerung des Drosselschiebers verantwortliche Stelleinrichtung durch Ueberwindung einer Federkraft.

Dies hat zur Folge, dass in der Nähe eines Schliess- oder Umkehrpunktes, infolge systeminterner Pulsationen, die sich auf die Federung der Steuerorgane übertragen, eine labile Positionierung vorherrscht, die die angestrebte Dichtheit am Drosselschieber nicht gewährleistet.

Die gleiche Problematik ist auch in der Patentschrift CH-A-398 185 vorhanden. Wenn dort im Betrieb die Drehzahl der Brennkaftmaschine und der Druck der Brennkaftmaschinenabgase zunehmen, so wird sich bei einem bestimmten Druck der Kolben im Sinne des Zusammendrückens der Feder bewegen und damit die Ventilnadel von ihrem Sitz abheben, also die Oeffnung freigeben. Systeminterne Pulsationen können auch hier die Dichtheit am Ventilnadelsitz frühzeitig ausser Kraft setzen.

Aus der Druckschrift EP-A-0 080 741 dieses Dokument fällt unter Art. 54 (3) des EPÜ ist eine Regeleinrichtung zur Regelung des Ladedrucks durch gezieltes Abblasen des Abgases bei einem mit einem Druckwellenlader aufgeladenen Verbrennungsmotor. Dabei erfolgt die Betätigung des Absperrorgans direkt durch den Gasdruck oder jeden anderen Prozessdruck. Indessen können die hohen Ladedruckreserven des Druckwellenladers im mittleren Drehzahlbereich nicht ausgenützt werden, weil die Trägheit und eine ungünstige Oeffnungscharakteristik des Absperrorgans, das sich nur allmählich öffnet, das Abblasen des Abgases zu früh einsetzen lässt, d. h., bevor die zulässige Ladedruckgrenze erreicht ist.

Hier gesamthaft will nun die Erfindung Abhilfe schaffen. Der Erfindung, wie sie in den Ansprüchen gekennzeichnet ist, liegt die Aufgabe zugrunde, die Regelcharakteristik eines Druckwellenladers dem Verlauf des maximal zulässigen Ladedruckes über die Motordrehzahl anzupassen, ohne dabei Gefahr zu laufen, dass systeminterne Pulsationen eine ungewollte Aufhebung der Dichtheit am Absperrorgan bewirken können.

Der wesentliche Vorteil der Erfindung ist darin zu sehen, dass damit die Vorzüge des Druckwellenladers gegenüber dem Abgasturbolader voll zur Geltung kommen : Ein günstiger Verlauf des Motordrehmomentes bzw. ein wesentlich besseres Verhalten des Motors wird bei der Beschleunigung des Fahrzeuges erreicht, da sowohl im mittleren als auch im höheren Motordrehzahlbereich entlang der zulässigen Ladedruckgrenze gefahren werden kann.

Dies ist möglich, weil die erfindungsgemässe Regeleinrichtung mit einem Vorsteuerorgan arbeitet, das zur Ansteuerung des Regelorgans dient und mit einer Vorsteuerdruck- und Regeldruckleitung verbunden ist, wobei die jeweilige Druckentnahme an verschiedenen Stellen im Druckwellenlader abgenommen werden kann.

Das Vorsteuerorgan ist dabei so ausgelegt, dass bei niedrigem Vorsteuerdruck der Weg zwischen der Regeldruck- und Druckentlastungsleitung offen ist. Durch diese Vorsteuerung kann eine exakte Regelgrenze festgelegt werden. Steigt nun der bei der Druckentnahmestelle herrschende Prozessdruck über diesen Wert hinaus, so schliesst die Druckentlastungsleitung, wodurch das Regelorgan über die Regeldruckleitung beaufschlagt wird. Dies führt dazu, dass das Absperrorgan durch den Regeldruck exakt öffnet.

In der Zeichnung sind mehrere Ausführungsbeispiele des Erfindungsgegenstandes vereinfacht dargestellt.

Es zeigen :

Figur 1 eine erste Regeleinrichtung eines Druckwellenladers mit einem Vorsteuerorgan ;

Figur 2 eine Abwandlung der Regeleinrichtung gemäss Fig. 1 ;

Figur 3 verschiedene Anordnungen von Druckentnahmestellen ;

Figur 4 eine schematische Darstellung des Ladedruckverlaufes.

Gleiche Teile sind in den Figuren mit denselben Bezugzeichen versehen. Erfindungsunwesentliche Teile des Druckwellenladers wie beispielsweise Welle, Lagerung, Antrieb usw. sind weggelassen. Die Strömungsrichtungen der Arbeitsmittel sind mit Pfeilen bezeichnet.

Der grundsätzliche Aufbau eines Druckwellenladers und dessen genaue Struktur kann der Druckschrift CH-T-123 143 der Anmelderin entnommen werden.

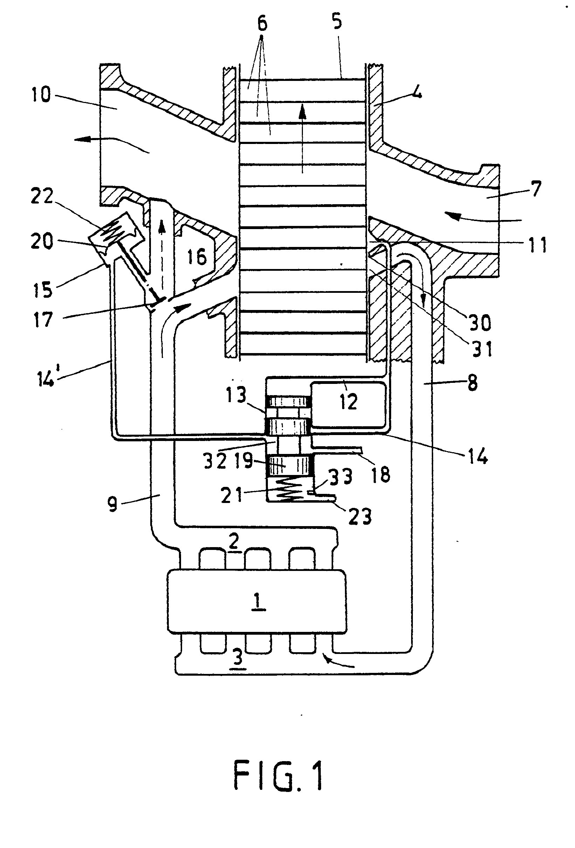

Der in Fig. 1 gezeigte Druckwellenlader ist der Einfachheit halber als eine Einzyklus-Maschine dargestellt, was sich dadurch ausdrückt, dass das Gehäuse 4 an den den Stirnflächen des Rotors 5 zugekehrten Seiten mit je einer Hochdruck- und einer Niederdrucköffnung versehen ist. Die heissen Abgase des Verbrennungsmotors 1 treten durch den Abgassammler 2 und den Motorabgaskanal 9 in den mit axialgeraden, beidseitig offenen Rotorzellen 6 versehenen Rotor 5 des Druckwellenladers ein, expandieren darin und verlassen ihn über den Auspuffkanal 10 und die nicht gezeigte Auspuffleitung in die Atmosphäre. Auf der Luftseite wird atmosphärische Luft angesaugt, strömt über den Luftansaugkanal 7 axial in den Rotor 5 ein, wird darin verdichtet und verlässt ihn als Ladeluft über den Ladeluftkanal 8 und den Ladeluftverteiler 3 zum Verbrennungsmotor 1 hin.

Zum Verständnis des eigentlichen, äusserst komplexen gasdynamischen Druckwellenprozesses, welcher nicht Erfindungsgegenstand ist, wird auf die schon genannte Druckschrift CH-T-123 143 der Anmelderin verwiesen.

Der für das Verständnis der Erfindung notwendige Prozessablauf wird nachstehend kurz erläutert :

Das aus den Rotorzellen 6 bestehende Zellenband ist die Abwicklung eines Zylinderschnittes des Rotors 5, welches sich bei Drehung des letzteren in Pfeilrichtung nach oben bewegt. Die Druckwellenvorgänge laufen im Inneren des Rotors 5 ab und bewirken im wesentlichen, dass sich ein gasgefüllter Raum und ein luftgefüllter Raum bilden. Im ersteren entspannt sich das Abgas und entweicht dann in den Auspuffkanal 10, während im zweiten ein Teil der angesaugten Frischluft verdichtet und in den Ladeluftkanal 8 ausgeschoben wird. Der verbleibende Frischluftanteil wird durch den Rotor 5 in den Auspuffkanal 10 überspült und bewirkt damit den vollständigen Austritt der Abgase.

Zwischen dem Motorabgaskanal 9 und dem Auspuffkanal 10 ist ein Abgasbypass 16 mit einem mediumgesteuerten Absperrorgan 17 angeordnet. Unterhalb der Regelgrenze wird das Absperrorgan 17 durch eine im Regelorgan 15 angeordnete vorgespannte Spiralfeder 22 geschlossen gehalten. In Oeffnungsrichtung des Absperrorgans 17 wirkt der Gasdruck im Motorabgaskanal 9 sowie der zum Regelorgan 15 durch die Regeldruckleitung 14, 14' führende Regeldruck. Der Regeldruck, beispielsweise Ladedruck oder der Druck aus der Expansionstasche 11, ist eine Funktion des Abgasdruckes bzw. der Motordrehzahl oder der Motorbelastung. Der Verlauf des Regeldruckes ist je nach Auslegung des Druckwellenladers verschieden.

Es ist deshalb schwierig, den gewünschten Oeffnungspunkt des Absperrorgans 17 konstruktiv eindeutig zu bestimmen. Es kann vorkommen, dass das Absperrorgan 17 unterhalb der Regelgrenze Leckage aufweist, d. h., dass die in Funktion zueinander stehenden Kräfte in der Oeffnungsrichtung grösser als die Vorspannkraft der Feder sind.

Um die Einbauverhältnisse am Motor zu verbessern, ist es notwendig, dass das Regelorgan 15 so klein wie möglich ist. Es treten dann folglich kleine Kräfte sowohl in Oeffnungsrichtung als auch in Schliessrichtung auf. Eine allzu kleine Schliesskraft ist aber problematisch, weil sie durch äussere Einflüsse, z. B. Reibung und Vibration schnell auf Null abgebaut wird. Das Absperrorgan 17 kann dann wegen solchen äusseren Einflüssen zu früh öffnen. Um das zu verhindern, ist eine bestimmte Schliesskraft im ganzen Bereich der niedrigen Motordrehzahlen bis unmittelbar unter die Ladedruckgrenze erforderlich.

Soweit ist die Regeleinrichtung eines Druckwellenladers bekannt.

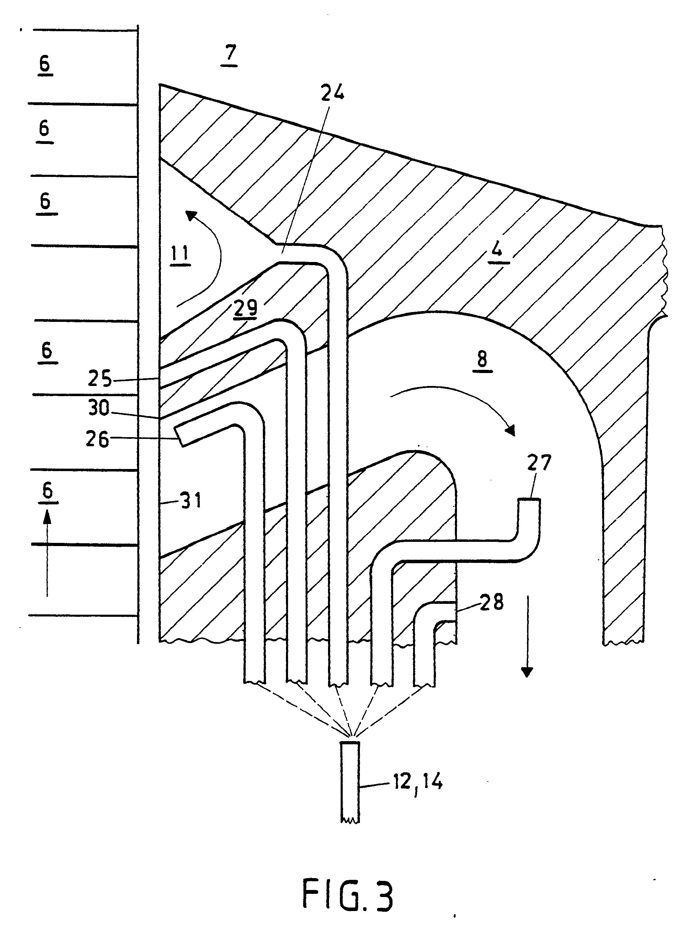

Gemäss der Erfindung ist nun ein zur Ansteuerung des Regelorgans 15 dienendes Vorsteuerorgan 13 vorgesehen. Das Vorsteuerorgan 13 ist über eine Vorsteuerdruckleitung 12 mit jeweils einer der im Bereiche des Ladeluftkanals 8 und der Expansionstasche 11 gemäss Fig. 3 angeordneten Druckentnahmestelle 24, 25, 26, 27 oder 28 verbunden.

Das Vorsteuerorgan 13 ist derart ausgelegt, dass es bei niedrigem Vorsteuerdruck den Weg zwischen der Regeldruckleitung 14' und einer Druckentlastungsleitung 18 offen hält und nach dem Erreichen eines bestimmten Vorsteuerdruckes die Regeldruckleitung 14, 14' schlagartig freigibt.

Die am Vorsteuerorgan 13 angeordnete Druckentlastungsleitung 18 führt frei in die Atmosphäre.

Durch die Vorsteuerung des Regelorgans 15 kann eine exakte Regelgrenze festgelegt werden und es wird verhindert, dass das Regelorgan 15 im mittleren Motordrehzahlbereich zu früh abbläst.

Als Regelgrösse für die Betätigung des Vorsteuerorgans 13 kann wahlweise jeweils einer von den an den Druckentnahmestellen 24, 25, 26, 27 oder 28 herrschenden Prozessdrücken verwendet werden. Genauso kann auch als Regelgrösse für die Betätigung des Regelorgangs 15 wahlweise jeweils einer von den erwähnten Prozessdrücken verwendet werden. Konstruktiv vorteilhaft ist es, wenn Vorsteuerdruck und Regeldruck resp. Hilfsregeldruck identisch sind ; dies ist aber nicht Bedingung.

Bei der in Fig. 1 dargestellten Regeleinrichtung werden das Vorsteuerorgan 13 und das Regelorgan 15 mit dem Druck aus der Expansionstasche 11 beaufschlagt. Da im unteren und mittleren Motordrehzahlbereich das Absperrorgan 17 geschlossen ist, steht für die Aufladung des Motors der volle Ladedruck zur Verfügung. Im oberen Motordrehzahlbereich wird das Absperrorgan 17 über das Regelorgan 15 durch den Regeldruck geöffnet. Die Beaufschlagung der Membran 20 des Regelorgans 15 durch den Regeldruck wird jedoch durch das vom Druck in der Expansionstasche 11 angesteuerte Vorsteuerorgan 13 freigegeben. Das Zu- und Abschalten des Regelorgans 15 erfolgt in diesem Falle durch den Druck in der Expansionstasche 11, welcher einen über der Drehzahl annähernd proportional ansteigenden Verlauf aufweist. Er ist im unteren und mittleren Drehzahlbereich tiefer als der Ladedruck. Dadurch wird verhindert, dass das Absperrorgan 17 im mittleren Drehzahlbereich zu früh abbläst. Mit dem Vorsteuerdruck aus der Expansionstasche 11 können im mittleren Drehzahlbereich höhere Ladedrücke gefahren werden, was zu relativ niedrigem Brennstoffverbrauch und Abgasrauchführung führt. Bei sinkendem Regeldruck wird die Membrankammer des Regelorgans 15 durch die Regeldruckleitung 14', den Zwischenraum 31 des Vorsteuerorgans 13 und durch die Druckentlastungsleitung 18 entlastet, bzw. entlüftet. Diese Entlüftung wird durch das Stellglied 19 des Vorsteuerorgans 13 gesteuert. Eine permanente Leckage ist dadurch ausgeschlossen. Das federvorgespannte Vorsteuerorgan 13 sperrt die Regeldruckleitung 14 zum Regelorgan 15 bis kurz vor dem Oeffnungspunkt des Absperrorgans 17. Nachdem die Regelgrenze erreicht ist, öffnet das Absperrorgan 17 schlagartig und bleibt im höheren Motordrehzahlbereich stetig offen. Sinkt der Vorsteuerdruck in der Vorsteuerdruckleitung 12 infolge Drehzahl- oder Laständerung unter einen bestimmten Grenzwert, so sperrt das Vorsteuerorgan 13 sofort die Regeldruckleitung 14, 14' zum Regelorgan 15 ab. Auf die Membran 20 wirkt aber noch der vorhergehende Regeldruck, welcher das Absperrorgan 17 noch offen hält. Die Regeldruckleitung 14' muss deshalb bei sinkender Motordrehzahl oder Sinken der Last schnell entlastet werden, damit das Absperrorgan 17 sofort schliesst, um so den vollen Ladedruck zu erhalten.

Bei der Entlastung der Regeldruckleitung 14' können Probleme bezüglich der Dichtheit des Absperrorgans 17 auftreten. Der Regeldruck wirkt in Oeffnungsrichtung des Absperrorgans 17. Um eine genügende Schliesskraft zu erhalten, muss die Differenz zwischen dem Oeffnungsdruck und dem Druck in der Membrankammer möglichst gross sein. Dies kann man dadurch erreichen, dass man die Membrankammer bis auf Umgebungsdruck entlastet. Der Ladedruck unterhalb der Regelgrenze ist somit voll verfügbar. Die Druckentlastungsleitung 18 kann statt frei in die Atmosphäre zum Beispiel in den Luftansaugkanal 7 geführt werden, wo Unterdruck herrscht und wo die Mündung dieser Leitung vor Schmutz und Spritzwasser geschützt ist.

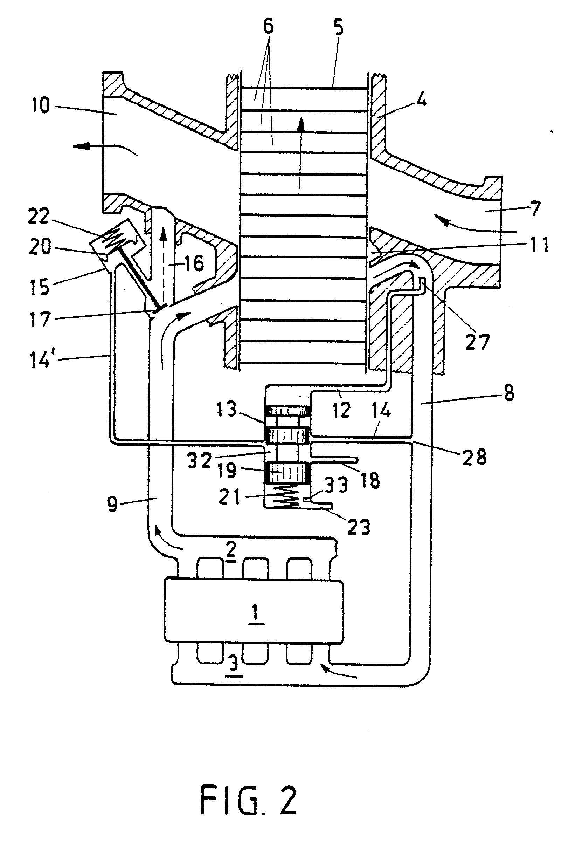

Bei der in Fig. 2 dargestellten Regeleinrichtung ist das Vorsteuerorgan 13 mit dem Druck aus dem zentral im Ladeluftkanal 8 angeordneten Druckentnahmestelle 27 und das Regelorgan 15 mit dem Druck aus dem an der Wand des Ladeluftkanals 8 angeordneten Druckentnahmestelle 28 beaufschlagt.

In Fig. 3 ist die Anordnung von Druckentnahmestellen 24, 25, 26, 27 und 28 im Bereiche des Ladeluftkanals 8 und der Expansionstasche 11 im vergrösserten Massstab dargestellt. Die Druckentnahmestelle 24 ist direkt in der Expansionstasche 11 angeordnet. Die Druckentnahmestelle 25 befindet sich im Steg 29 zwischen dem Ladeluftkanal 8 und der Expansionstasche 11. Die Druckentnahmestelle 26 ist im Ladeluftkanal 8 unmittelbar vor der Schliesskante 30 in der Ladeluftaustrittsöffnung 31 angeordnet und die Druckentnahmestelle 27 mitten im Ladeluftkanal 8. Die Druckentnahmestelle 28 ist an der Wand des Ladeluftkanals angeordnet.

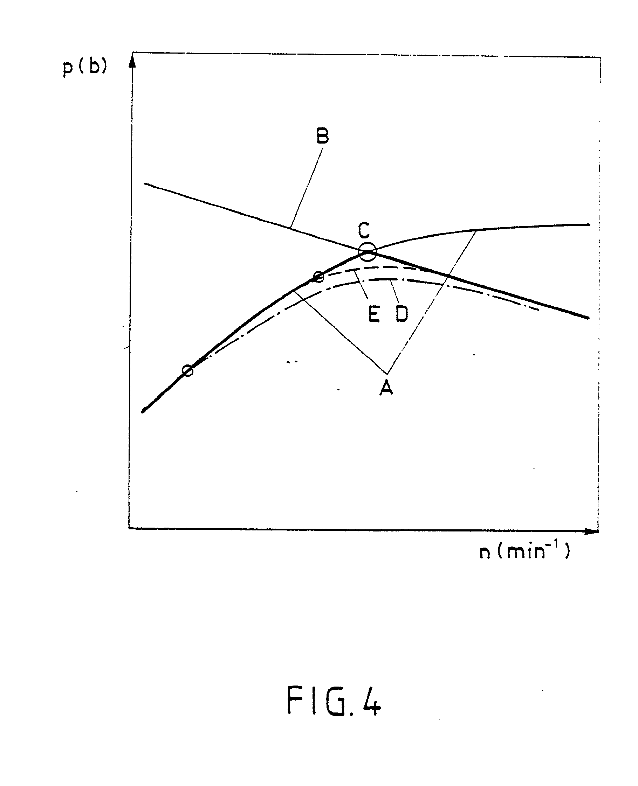

Der Vollastverlauf dieser Drücke ist als Funktion der Motordrehzahl voneinander verschieden. Die Auswahl einer bestimmten Entnahmestelle ist vom Verlauf der Ladedruckcharakteristik des Druckwellenladers (Kurve A in Fig. 4), und vom Verlauf der zulässigen Ladedruckgrenze abhängig sowie davon, inwieweit die Ladedruckreserve im mittleren Motordrehzahlbereich ausgenutzt werden soll.

Der Spitzendruck im Zylinder eines aufgeladenen Verbrennungsmotors ist eine Funktion des Ladedruckes, der Lufttemperatur und der Motordrehzahl und ist unter anderem auch aus Festigkeitsgründen beschränkt. Fahrzeug-Verbrennungsmotoren erlauben bezüglich der Spitzendruckgrenze im mittleren Drehzahlbereich einen höheren Ladedruck als im oberen, d. h. der Motor erlaubt einen degressiven Ladedruckverlauf über der Motordrehzahl, wenn entlang der Ladedruckgrenze gefahren werden soll. In Fig. 4 ist mit A der Verlauf des erreichbaren Ladedruckes eines mit einem Druckwellenlader ohne Abgasbypass aufgeladenen Verbrennungsmotors qualitativ dargestellt. Der Gradient dieser Kurve sinkt mit steigender Motordrehzahl. Mit B ist die vom Motor abhängige zulässige Ladedruckgrenze als eine Gerade mit einem negativen Gradienten (degressiver Verlauf) gezeigt. Die beiden Linien bilden im mittleren Motordrehzahlbereich einen Schnittpunkt C. Bei steigender Motordrehzahl ist es im tieferen Drehzahlbereich sinnvoll, entlang des verdickten Teils der Linie A bis zum Schnittpunkt C zu fahren. Um die Ladedruckgrenze B nicht zu überschreiten, sollte im höheren Drehzahlbereich entlang des verdickten Teils der Linie B gefahren werden.

Eine solche Regelcharakteristik mit einem Knick im Punkt C ist schwer erreichbar.

Die Kurve D stellt die Regelcharakteristik eines Druckwellenladers ohne Vorsteuerorgan dar. Es ist in diesem Falle im tieferen Motordrehzahlbereich nicht möglich, entlang des verdickten Teils der Kurve A gerade bis zum Schnittpunkt C zu fahren, da wegen der Trägheit und des allmählichen Oeffnens des Absperrorgans 17 die Ladedruckgrenze überschritten werden könnte.

Das Vorsteuerorgan 13 schafft hier Abhilfe. Kurz vebor die Regelgrenze, d. h. die zum Schnittpunkt C gehörige Motordrehzahl erreicht ist, wird die Regeldruckleitung 14, 14' schlagartig freigegeben und der volle Regeldruck wirkt auf die Membran 20 des Regelorgans 15 und öffnet das Absperrorgan 17. Mit E ist eine gute Annäherung an den idealen Verlauf (dicke Linien) dargestellt, die sich nur mit einem mit dem beschriebenen Vorsteuerorgan ausgerüsteten Druckwellenlader erreichen lässt. Gerade im mittleren Motordrehzahlbereich sollte man mit möglichst hohem Ladedruck fahren, um einen grösstmöglichen Motordrehmomentanstieg zu erreichen.

Für die Einstellung des Ansprechdruckes im Vorsteuerorgan 13 ist der Schnittpunkt C massgebend.

Die Wirkungsweise der Regeleinrichtung geht aus folgendem hervor :

Im Stillstand des Motors und bei niedriger Motordrehzahl ist das Stellglied 19 des Vorsteuerorgans 13 unter der Wirkung der Spiralfeder 21 in seinem oberen Totpunkt gehalten. In dieser Lage des Stellgliedes 19 ist der Druck in der Regeldruckleitung 14' über den Zwischenraum 32 und der Druckentlastungsleitung 18 mit dem atmosphärischen Druck ausgeglichen. Die Spiralfeder 22 des Regelorgans 15 wirkt in diesem Falle auf die Membran 20 und hält das Absperrorgan 17 dicht geschlossen.

Die ganze Abgasmenge strömt bei niedriger Motordrehzahl durch den Motorabgaskanal 9 in den Rotor 5 des Druckwellenladers. Die durch den Luftansaugkanal 7 angesaugte Luft wird anschliessend in den Rotorzellen 6 verdichtet und durch den Ladeluftkanal 8 zum Motor 1 zugeführt. Bei steigender Motordrehzahl steigt der Druck an den Druckentnahmestellen 24, 25, 26, 27 und 28. Ueber die Vorsteuerdruckleitung 12 wirkt der Druck an das Vorsteuerorgan 13, verschiebt das Stellglied 19 bis zum Anschlag 33 und drückt die Spiralfeder 21 zusammen. Der Raum unter dem Stellglied 19 wird durch die Entlüftungsöffnung 23 entspannt. Bei einer bestimmten Motordrehzahl (Regelgrenze) wird die Regeldruckleitung 14, 14' schlagartig freigegeben. Der Regeldruck dringt durch die Regeldruckleitung 14, 14' zu dem Regelorgan 15, wirkt auf die Membran 20, drückt die Spiralfeder 22 zusammen und öffnet das Absperrorgan 17 schlagartig.

Dies erlaubt bis in der Nähe des Schnittpunktes C entlang der Druckladercharakteristik A zu fahren. Im weiteren Verlauf kann bei höheren Motordrehzahlen, je nach der Auswahl der Druckentnahmestelle, eine sehr gute Annäherung (Kurve E in Fig. 3) zu der Ladedruckgrenze erreicht werden.

Der Vorteil der Erfindung wird insbesondere darin gesehen, dass ein günstigerer Verlauf des Motordrehmomentes bzw. ein wesentlich besseres Verhalten des Motors bei der Beschleunigung des Fahrzeuges erreicht wird.

Selbstverständlich ist die Erfindung nicht auf das Dargestellte und das Beschriebene beschränkt. In Abweichung hiervon könnte das Vorsteuerorgan 13 in das Regelorgan 15 integriert und in einem gemeinsamen Gehäuse eingebaut werden.

Ausserdem kann sowohl das Vorsteuerorgan 13 als auch das Regelorgan 15 derart ausgelegt werden, dass sie mit einem Differenzdruck aus zwei beliebigen Prozessdrücken betätigt werden.

**Patentansprüche**

1. Regeleinrichtung eines gasdynamischen Druckwellenladers an einem Fahrzeug-Verbrennungsmotor, bei dem ein Abgasbypass (16) mit einem darin angeordneten Absperrorgan (17) den Motorabgaskanal (9) mit dem Auspuffkanal (10) verbindet und wobei zur Betätigung des Absperrorgans (17) ein mediumgesteuertes Regelorgan (15) vorgesehen ist, dadurch gekennzeichnet, dass ein zur Ansteuerung des Regelorgans (15) dienendes Vorsteuerorgan (13) über eine Vorsteuerdruckleitung (12) und über eine Regeldruckleitung (14) mit einer oder verschiedenen im Druckwellenlader angeordneten Druckentnahmestellen (24, 25, 26, 27, 28) verbunden ist, und derart ausgelegt ist, dass es bei niedrigem Vorsteuerdruck den Weg zwischen der Regeldruckleitung (14') und einer Druckentlastungsleitung (18) offen hält und nach dem Erreichen eines bestimmten Vorsteuerdruckes die Regeldruckleitung (14, 14') schlagartig freigibt und dass die Druckentlastungsleitung (18) frei in die Atmosphäre oder in den Luftansaugkanal (7) führt.

2. Regeleinrichtung nach Anspruch 1, dadurch gekennzeichnet, dass die Druckentnahmestelle (24) in der Expansionstasche (11) angeordnet ist.

3. Regeleinrichtung nach Anspruch 1, dadurch gekennzeichnet, dass die Druckentnahmestelle (25) in einem zwischen dem Ladeluftkanal (8) und der Expansionstasche (11) vorhandenen Steg (29) angeordnet ist.

4. Regeleinrichtung nach Anspruch 1, dadurch gekennzeichnet, dass die Druckentnahmestelle (26) unmittelbar vor der Schliesskante (30) der Ladeluftaustrittsöffnung (31) angeordnet ist.

5. Regeleinrichtung nach Anspruch 1, dadurch gekennzeichnet, dass die Druckentnahmestelle (27) zentral im Ladeluftkanal (8) angeordnet ist.

6. Regeleinrichtung nach Anspruch 1, dadurch gekennzeichnet, dass die Druckentnahmestelle (28) an der Wand des Ladeluftkanals (8) angeordnet ist.

**Claims**

1. Control device of a gas dynamic pressure wave supercharger on a vehicle internal combustion engine in which an exhaust gas bypass (16) having a shut-off device (17) located within it connects the engine outlet gas duct (9) to the exhaust duct (10) and in which a regulating device (15) controlled by a medium is provided for actuating the shut-off device (17), characterised in that a pre-control device (13) initiating control of the control device (15) is connected to one or several pressure tapping positions (24, 25, 26, 27, 28), located in the pressure wave supercharger, *via* a pre-control pressure pipe (12) and *via* a control pressure pipe (14) and is designed in such a way that it keeps the path between the control pressure pipe (14') and a pressure relief pipe (18) open at low pre-controlled pressure and abruptly frees the control pressure pipe (14, 14') when a certain pre-control pressure is reached and that the pressure relief pipe (18) is connected to the open air or to the air induction duct (7).

2. Control device according to Claim 1, characterised in that the pressure tapping position (24) is located in the expansion pocket (11).

3. Control device according to Claim 1, characterised in that the pressure tapping position (25) is located in a land (29) present between the charge air port (8) and the expansion pocket (11).

4. Control device according to Claim 1, characterised in that the pressure tapping position (26) is located directly before the closing edge (30) of the charge air outlet opening (31).

5. Control device according to Claim 1, characterised in that the pressure tapping position (27) is located in the centre of the charge air port (8).

6. Control device according to Claim 1, characterised in that the pressure tapping position (28) is located on the wall of the charge air duct (8).

### Revendications

1. Dispositif de réglage d'un appareil gazodynamique de suralimentation à ondes de pression pour un moteur à combustion interne de véhicule, dans lequel une dérivation (16) des gaz d'échappement où est disposé un organe d'obturation (17) relie le canal (9) d'évacuation des gaz d'échappement du moteur avec le canal d'échappement (10) et dans lequel il est prévu un organe de commande (15) commandé par les gaz pour actionner l'organe d'obturation (17), caractérisé en ce qu'un organe de pilotage (13) servant à piloter l'organe de commande (15) est raccordé, par une conduite de pression de pilotage (12) et une conduite de pression de commande (14), à un ou à différents points de prise de pression (24, 25, 26, 27, 28) situés dans l'appareil de suralimentation à ondes de pression et est constitué de telle façon que pour une faible pression de pilotage, il maintient ouverte la voie entre la conduite de pression de commande (14') et une conduite de détente de la pression (18) et qu'il libère brusquement la conduite de pression de commande (14, 14') lorsqu'une pression de pilotage déterminée est atteinte et en ce que la conduite de détente de la pression (18) débouche librement dans l'atmosphère ou dans le canal d'aspiration d'air (7).

2. Dispositif de réglage suivant la revendication 1, caractérisé en ce que le point de prise de pression (24) est situé dans la poche de dilatation (11).

3. Dispositif de réglage suivant la revendication 1, caractérisé en ce que le point de prise de pression (25) est situé dans une paroi (29) séparant le canal d'air d'admission (8) et la poche de dilatation (11).

4. Dispositif de réglage suivant la revendication 1, caractérisé en ce que le point de prise de pression (26) est situé immédiatement avant l'arête de fermeture (30) de l'ouverture de sortie (31) de l'air d'admission.

5. Dispositif de réglage suivant la revendication 1, caractérisé en ce que le point de prise de pression (27) est situé au centre du canal d'air d'admission (8).

6. Dispositif de réglage suivant la revendication 1, caractérisé en ce que le point de prise de pression (28) est situé à la paroi du canal d'air d'admission (8).

FIG. 1

FIG. 2

FIG.3

FIG.4